# EUROPÄISCHE PATENTSCHRIFT

(11) **EP 0 736 467 B1**
(45) Veröffentlichungstag und Bekanntmachung des Hinweises auf die Patenterteilung: **23.09.1998**
(21) Anmeldenummer: 95115524.1
(22) Anmeldetag: 02.10.1995
(51) Int. Cl.: B65G 29/00

(54) **Überführungsstern für rotierende Flaschenbehandlungsmaschinen**
Rotating transfert star wheel for bottles treating machines
Roue à étoiles pour machine de traitement de bouteilles

(30) Priorität: 06.04.1995 DE 19512860
(43) Veröffentlichungstag der Anmeldung: 09.10.1996
(73) Patentinhaber: KHS Maschinen- und Anlagenbau Aktiengesellschaft, 44143 Dortmund (DE)
(72) Erfinder: Bernhard, Herbert, D-55578 Wolfsheim (DE)

(56) Entgegenhaltungen:
- AU-A- 454 991
- DE-U- 9 310 905
- US-A- 1 981 641
- US-A- 4 757 891

## Beschreibung

Die Erfindung bezieht sich auf einen Überführungsstern für rotierende Flaschenbehandlungsmaschinen mit rotierenden inneren Zentrierelementen zur Abstützung und Zentrierung von Flaschenwandungsbereichen und zugeordneten Rumpfunterstützungen sowie zusätzlich angeordneten in Rotation ortsfesten äußeren Zentrierelementen.

Es ist üblich, mit den vorbeschriebenen Flaschenbehandlungsmaschinen unterschiedliche Flaschengrößen zu verarbeiten. Hierzu ist es erforderlich, daß die Führungsteile und Überführungssterne, auch Formatteile genannt, den jeweiligen Flaschengrößen angepaßt werden. In diesem Zusammenhang sind insbesondere bei rotierenden Flaschenbehandlungsmaschinen im Einlauf- und Auslaufbereich besondere Vorkehrungen erforderlich, um die jeweiligen Zentrierelemente auszutauschen. Dieses bedingt, daß sämtliche für eine bestimmte Flaschengröße ausgelegte Formatteile entfernt und durch andere Größen ersetzt werden müssen. Insbesondere bei einer häufigen Umstellung von der einen zur anderen Flaschengröße fallen dabei erhebliche Umrüstzeiten an. Solche austauschbaren Führungsteile sind beispielsweise aus der DE-U-9310905 bekannt.

Diese Aufgabe wird gemäß der Erfindung be einem Überführungsstern der eingangs genannten Art dadurch gelöst, daß die Zentrierelemente der Wandungsteile für die größte zu verarbeitende Flasche höhenmäßig gelagert sind und diesen zusätzlich weitere Zentrierelemente für kleinere Flaschengrößen höhenmäßig verschiebbar und positionierbar zugeordnet sind, so daß die Zentrierelemente für die Wandungsbereiche von kleineren Flaschengrößen bei der Überführung von größeren Flaschen außerhalb deren Außenkontur gelagert sind.

Weitere Merkmale der Neuerung ergeben sich aus den Unteransprüchen.

Mit der vorgeschlagenen Ausgestaltung können die sonst üblichen Umrüstzeiten erheblich reduziert werden, wobei lediglich ein Überführungsstern für verschiedene Flaschengrößen vorgesehen ist und die zur Zentrierung erforderlichen unterschiedlichen Zentrierelemente in einer Baueinheit verankert sind. Dabei ist die Zuordnung dieser Teile so gewählt, daß eine gegenseitige Behinderung bei der jeweils erforderlichen Umrüstung und Verarbeitung der anderen Flaschengröße vermieden wird.

Im nachfolgenden wird die Neuerung anhand eines in der Zeichnung dargestellten Ausführungsbeispiels näher erläutert.

In der Zeichnung zeigt:
- Fig. 1: einen Querschnitt durch den Überführungsstern,
- Fig. 2: einen verkleinerten Querschnitt mit den Führungsteilen für kleine Flaschen in Arbeitsposition und
- Fig. 3: einen weiteren Querschnitt mit den für große Flaschen vorgesehenen Zentrierelementen in Arbeitsposition.

Im Ausführungsbeispiel wird die Verarbeitung von Kunststoff-Flaschen 1 dargestellt, die beispielsweise von einem Überführungsstern 2 an ihren Mündungskragen 3 bzw. Mündungsbereichen gehalten und zentriert werden. Hierzu ist ein Rotationskörper 4 vorgesehen, der an aufrecht stehenden Abstützungen 5 gelagert und um eine Achse 6 in Abhängigkeit der Maschinenleistung rotiert. Zusätzlich zu dem Rotationskörper 4 sind äußere ortsfeste Zentrierelemente 7, 8 vorgesehen, die ein Abgleiten der Flaschen 1 aus den Zentrierausnehmungen verhindern. Bei der Umlenkung der Flaschen 1 bzw. deren Überführung in die jeweilige Flaschenbehandlungsmaschine sowie auch bei deren Abführung aus dieser nach der entsprechenden Behandlung muß die aufgrund der Rotationsgeschwindigkeit unvermeidbare Pendelbewegung der Flaschen 1 vermieden werden. Hierzu sind Zentrierelemente 9, 10 vorgesehen, die in Form von sternförmig angeordneten Ausnehmungen 11 die jeweiligen Flaschenwandungsbereiche 12, 13 zentrieren und abstützen.

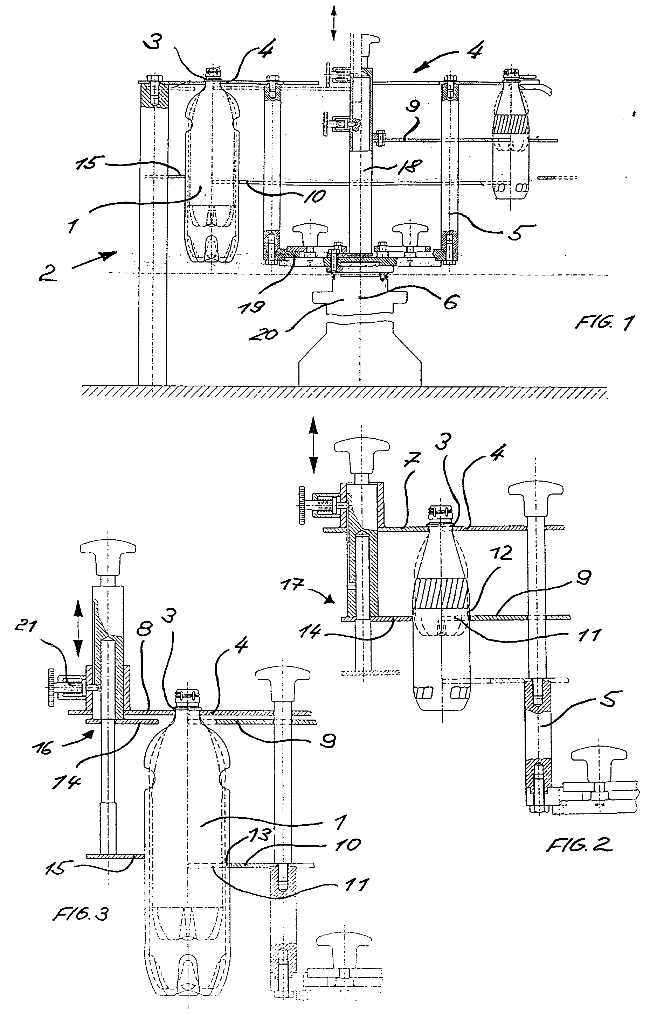

Gemäß dem in Fig. 1 dargestellten Ausführungsbeispiel sind rotierende Zentrierelemente 9, 10 vorgesehen, die beispielsweise für die größte zu verarbeitende Flasche 1 höhenmäßig an dem Überführungsstern 2 fixiert sind und den Körper einer solchen Flasche 1 teilweise umschließen und zentrieren. Gleichzeitig sind äußere ortsfeste Zentrierelemente 14, 15 vorgesehen, die ein Auspendeln während der Überführung verhindern.

Sollen nun andere bzw. kleinere Flaschengrößen verarbeitet werden, so ist es erforderlich, auch für diese veränderten Abmessungen entsprechende Zentrierelemente 14, 15 vorzusehen. Zu diesem Zwecke sind gemäß Fig. 2 Zentrierelemente vorgesehen, die aus einer Ruheposition 16 gemäß Fig. 3 in eine Arbeitsposition 17 höhenmäßig verschiebbar gelagert sind. Dazu weist der Überführungsstern 2 einen inneren zentralen Träger 18 auf, auf dem die Zentrierelemente 9 durch einfaches axiales Verschieben in die jeweilige Höhe verbracht und zentriert werden können. Bei der Verarbeitung von großen Flaschen sind die für die kleineren Flaschen vorgesehenen Zentrierelemente 9, 14, wie beispielsweise Fig. 3 zeigt, höhenmäßig so angeordnet, daß sie jeweils außerhalb der jeweiligen Außenkontur der aufgenommenen Flasche 1 verbleiben und so praktisch störungsfrei in ihrer Ruheposition 16 mitbewegt werden. Auch die äußeren Zentrierelemente 14, 15 können, wie aus den Fig. 2 und 3 erkennbar ist, durch höhenmäßige Verschiebung aus der Arbeitsposition gemäß Fig. 2 für kleinere Flaschen in eine Ruheposition 16 gemäß Fig. 3 bewegt werden, so daß sie ebenfalls den Transport der größeren Flaschen ungehindert zulassen.

Zur schnellen Umrüstung sind die jeweiligen Zentrierelemente mit Rastverschlüssen 21 versehen, die mit einfachen Handgriffen gelöst und automatisch unter Federdruck fixiert werden. Der komplette Überführungsstern 2 ist wiederum auf einer Trägerplatte 19 der Antriebsstation 20 gelagert und ebenfalls mit wenigen Handgriffen von dieser lösbar.

## Patentansprüche

1. Überführungsstern für rotierende Flaschenbehandlungsmaschnen mit rotierenden inneren Zentrierelementen (9,10) zur Abstützung und Zentrierung von Flaschenwandungsbereichen und zugeordneten Rumpfunterstützungen sowie zusätzlich angeordneten in Rotation ortsfesten äußeren Zentrierelementen (14,15), ***dadurch gekennzeichnet**,* daß die Zentrierelemente (10,15) der Wandungsteile für die größte zu verarbeitende Flasche höhenmäßig gelagert sind und diesen zusätzlich weitere Zentrierelemente (9, 14) für kleinere Flaschengrößen höhenmäßig verschiebbar und positionierbar zugeordnet sind, so daß die Zentrierelemente (9, 14) für die Wandungsbereiche von kleineren Flaschengrößen bei der Überführung von größeren Flaschen (1) außerhalb deren Außenkontur gelagert sind.

2. Überführungsstern nach Anspruch 1, ***dadurch gekennzeichnet***, daß die Zentrierelemente (9, 14) für die Wandungsbereiche von kleineren Flaschen (1) bei Verarbeitung von größeren Flaschen (1) in deren Mündungshöhe (3) positionierbar sind.

3. Überführungsstern nach den Ansprüchen 1 oder 2, ***dadurch gekennzeichnet***, daß die rotierenden inneren Zentrierelemente (9, 10) auf einem zentralen Träger höhenmäßig verschiebbar und fixierbar gelagert sind.

4. Überführungsstern nach den Ansprüchen 1 bis 3, ***dadurch gekennzeichnet***, daß die ortsfesten äußeren Zentrierelemente (14, 15) auf einem oder mehreren Trägern höhenmäßig verschiebbar und fixierbar sind.

5. Überführungsstern nach Anspruch 4, ***dadurch gekennzeichnet***, daß die äußeren und/oder inneren Zentrierelemente (9, 14) der kleineren Flaschen (1) auf einem Träger der Zentrierelemente (10, 15) für größere Flaschen (1) höhenmäßig verschiebbar und fixierbar gelagert sind.

## Claims

1. Transfer star for rotating bottle cleaning machines with rotating interior centering means (9, 10) for the support and centering of bottle wall areas and associated body support as well as additionally arranged external centering means (14, 15) stationary during rotation, characterised in that the centering means (10, 15) of the wall portions for the largest bottle to be cleaned are at a higher level and additionally provide further centering means (9, 14) which can be adjusted in height and position for smaller bottle sizes in such a way that, during the transfer of the larger bottles (1) the centering means (9, 14) for the wall portions of smaller bottle sizes are positioned externally of the outer contour of the larger bottles (1).

2. Transfer star according to claim 1, characterised in that, during the cleaning of larger bottles (1) centering means (9, 14) for the wall portions of smaller bottles can be positioned at mouth level (3) of the larger bottles (1).

3. Transfer star according to the claims 1 or 2, characterised in that the rotating internal centering means (9, 10) can be adjusted in height and locked in position on a central support.

4. Transfer star according to the claims 1 to 3, characterised in that the stationary external centering means (14, 15) can be adjusted in height on one or several supports and locked in position.

5. Transfer star according to claim 4, characterised in that the external and/or internal centering means (9, 14) of the smaller bottles (1) are positioned on a support of the centering means (10, 15) for larger bottles (1) and can be adjusted in height and locked in position.

## Revendications

1. Etoile de transfert destinée à des machines de traitement rotatives de bouteilles, comportant des éléments de centrage (9, 10) intérieurs rotatifs destinés au support et au centrage de parois de bouteilles et au soutien associé des corps, ainsi que des éléments de centrage (14, 15) extérieurs, stationnaires en rotation, prévus de façon supplémentaire, caractérisée en ce que les éléments de centrage (10, 15) des parties de paroi sont positionnés en hauteur pour correspondre à la plus grande bouteille à traiter et qu'à ceux-ci sont associés, en outre, d'autres éléments de centrage (9, 14) destinés à des bouteilles de plus petite taille, qui peuvent être déplacés et positionnés en hauteur, de telle sorte que les éléments de centrage (9, 14) destinés aux parties de parois de bouteilles de plus petite taille soient placés, lors du transfert de plus grandes bouteilles (1), à l'extérieur de leur contour externe.

2. Etoile de transfert selon la revendication 1, caractérisée en ce que les éléments de centrage (9, 14) destinés aux parties de paroi de bouteilles plus petites (1), lors du traitement de bouteilles plus grandes (1), peuvent être positionnés à la hauteur de leur embouchure (3).

3. Etoile de transfert selon les revendications 1 ou 2, caractérisée en ce que les éléments de centrage (9, 10) intérieurs rotatifs sont montés sur un support central avec possibilité de déplacement et de fixation en hauteur.

4. Etoile de transfert selon les revendications 1 à 3, caractérisée en ce que les éléments de centrage (14, 15) extérieurs stationnaires sont montés sur un ou plusieurs supports avec possibilité de déplacement et de fixation en hauteur.

5. Etoile de transfert selon la revendication 4, caractérisée en ce que les éléments de centrage (9, 14) extérieurs et/ou intérieurs des bouteilles plus petites (1) sont montés sur un support des éléments de centrage (10, 15) destinés aux bouteilles plus grandes (1), avec possibilité de déplacement et de fixation en hauteur.
